# FASCICULE DE BREVET EUROPEEN

(11) **EP 4 405 164 B1**
(45) Date de publication et mention de la délivrance du brevet: **02.12.2026**
(21) Numéro de dépôt: 22789510.9
(22) Date de dépôt: 14.09.2022
(51) Int. Cl.: B29C 70/20, B29C 70/32, B29C 70/38, B29L 31/00, B29L 23/00

(54) **GÉOMÉTRIE D'UNE SURFACE DE DRAPAGE**
GEOMETRIE EINER AUFLAGEOBERFLÄCHE
GEOMETRY OF A LAYUP SURFACE

(30) Priorité: 24.09.2021 BE 202105753
(43) Date de publication de la demande: 31.07.2024
(73) Titulaire: Safran Aero Boosters, 4041 Herstal (BE)
(72) Inventeur: GALLET, Julien, Philippe, 4041 Herstal (BE); WLASOW WLASOWSKI, Michel, 4041 Herstal (BE)
(74) Mandataire: Cabinet Beau de Loménie
(86) Numéro de dépôt international: PCT/EP2022/075556
(87) Numéro de publication internationale: WO 2023/046553

(56) Documents cités:
- WO-A1-2012/046020
- US-A1- 2020 180 238

## Description

### Domaine Technique

La présente invention se rapporte à la fabrication de pièces en matériau composite par drapage sur une surface. En particulier, mais non exclusivement, l'invention se rapporte à la fabrication de carters de moteurs aéronautiques.

### Technique antérieure

L'utilisation de matériaux composites pour la fabrication de pièces aéronautiques, par exemple pour les carters de moteurs aéronautiques, permet d'obtenir des pièces résistantes et présentant des performances mécaniques équivalentes voire supérieures à celles réalisées en métal, tout en ayant une masse bien inférieure.

Il est connu de réaliser des pièces en matériau composite par drapage sur une surface de structures fibreuses pré-imprégnées. Pour des raisons de coûts de production et de répétabilité, le drapage peut être réalisé automatiquement, selon la technique de placement automatique de fibres (« AFP » en anglais, pour « automated fiber placement »). Un exemple de procédé de fabrication d'une pièce en matériau composite utilisant la méthode « AFP » est par exemple décrit dans le document FR3062336B1.

Toutefois, dans le cas de pièces présentant des surfaces convexes avec des angles de faible amplitude, par exemple de 120° ou moins, la tête ou le rouleau de dépose des structures fibreuses ne permet pas d'accéder au fond desdits angles. C'est par exemple le cas des pièces comprenant une ou plusieurs brides s'étendant depuis le corps de la pièce.

Ainsi, pour réaliser des pièces présentant de tels angles, on réalise le drapage avec des angles de plus grande amplitude pour permettre le passage de la tête ou du rouleau de dépose, puis on déforme mécaniquement la structure réalisée par drapage pour obtenir les angles souhaités. Une telle solution est par exemple décrite dans le document WO2012/046020. Dans ledit document, on réalise une pièce comprenant un corps cylindrique et une bride circulaire s'étendant perpendiculairement au corps cylindrique. Le drapage est réalisé en drapant la portion destinée à former la bride dans le prolongement du drapage de la portion destinée à former le corps cylindrique. Puis, on procède à la déformation de la portion destinée à former la bride pour la placer perpendiculairement à l'axe de révolution du corps. La portion destinée à former la bride lors du drapage présente des ondulations circonférentielles de plus grande amplitude à mesure que l'on se rapproche de l'extrémité libre de la première portion, de sorte à obtenir une bride lisse après déformation.

Cependant, la déformation mécanique de la structure drapée entraîne des déformations des structures fibreuses drapées et des contraintes importantes dans les fibres, en particulier à proximité du sommet de l'angle. Ces déformations sont d'autant plus accentuées quand un congé est présent entre la bride et le corps.

### Exposé de l'invention

La présente invention a pour but de remédier aux inconvénients précités. A cet effet, la présente invention propose un procédé de détermination d'une géométrie d'un moule de drapage pour la réalisation d'une ébauche d'une pièce en matériau composite comprenant un corps de révolution d'axe A dirigé selon une direction axiale, ledit corps s'étendant autour de la direction axiale selon une direction circonférentielle, et au moins une bride s'étendant depuis une extrémité du corps selon une direction d'extension, le procédé comprenant :
- la détermination d'une première surface de révolution d'axe A dirigé selon la direction axiale ayant la forme du corps à réaliser, ladite première surface s'étendant autour de la direction axiale selon la direction circonférentielle,
- la détermination d'une deuxième surface située dans le prolongement de la première surface selon une direction de prolongement, l'angle formé entre la direction axiale et la direction de prolongement étant supérieur à l'angle formé entre la direction axiale et la direction d'extension, la deuxième surface présentant des courbes fermées d'ondulations selon la direction circonférentielle se suivant successivement selon la direction de prolongement, chaque courbe fermée d'ondulations circonférentielles correspondant à un cercle appartenant à la bride à réaliser, la longueur curviligne de ladite courbe fermée correspondant à la valeur du périmètre dudit cercle,
le procédé étant caractérisé en ce que la deuxième surface présente en outre des courbures de correction dans la direction de prolongement, de sorte que tous les points de chaque courbe fermée d'ondulations circonférentielles sont à une même distance curviligne de la jonction entre la première surface et la deuxième surface, ladite distance curviligne appartenant à la deuxième surface et ayant une valeur correspondant à la distance curviligne entre le cercle appartenant à la bride à réaliser correspondant à ladite courbe fermée, et la jonction entre la bride et le corps à réaliser.

Le terme de « corps de révolution » doit s'entendre comme un corps ayant la forme d'un volume de révolution complet, ou d'au moins une portion d'un volume de révolution complet.

La distance curviligne entre un point d'une courbe fermée et la jonction entre la première surface et la deuxième surface est définie comme la plus petite distance curviligne appartenant à la deuxième surface et permettant de joindre ledit point de la courbe fermée à ladite jonction.

La distance curviligne entre un cercle et la jonction entre la bride et le corps est définie comme la plus petite distance curviligne appartenant à la bride et permettant de joindre un point du cercle à ladite jonction.

Ainsi, en réalisant des courbures de correction dans la direction de prolongement, on limite les contraintes dans les fibres suite à la déformation. En effet, les ondulations circonférentielles génèrent des manques de longueur dans la direction d'extension, que l'on rectifie à l'aide des courbures de correction.

En outre, la détermination de différentes longueurs curvilignes entre les cercles appartenant à la bride et la jonction entre la bride et le corps permet de prendre en compte le rayon d'un éventuel congé entre ladite bride et ledit corps dès la conception du moule. Ainsi, on limite les tensions dans les fibres à l'endroit dudit congé.

Selon une caractéristique particulière de l'invention, les points d'inflexion de chaque courbe fermée d'ondulations circonférentielles sont compris sur un même cercle. Selon une autre caractéristique particulière de l'invention, les minimums de chaque courbe fermée d'ondulations circonférentielles sont compris sur un même cercle dont le rayon est supérieur ou égal au rayon du cercle réalisant la jonction entre la première surface et la deuxième surface.

Selon une autre caractéristique particulière de l'invention, les minimums de chaque courbe fermée d'ondulations circonférentielles sont compris sur un même cercle dont le rayon est identique au cercle réalisant la jonction entre la première surface et la deuxième surface.

Ainsi, on s'assure d'obtenir le moins de contraintes possibles dans les fibres lors de la déformation de l'ébauche fibreuse.

Les ondulations circonférentielles déforment la deuxième surface et peuvent donc provoquer des manques de matière sur les maximums des ondulations circonférentielles. Ainsi, en utilisant des courbures de correction plus courbées sur les maximums des ondulations circonférentielles, on peut apporter plus de matière à ces endroits.

Selon une autre caractéristique particulière de l'invention, l'angle entre la direction axiale et la direction d'extension est inférieur ou égal à 120° et l'angle entre la direction axiale et la direction de prolongement est supérieur à 120°.

Selon une autre caractéristique particulière de l'invention, la bride à réaliser comprend un congé à sa jonction avec le corps à réaliser.

L'invention concerne en outre un procédé de fabrication d'une pièce en matériau composite comprenant un corps de révolution d'axe dirigé selon une direction axiale, ledit corps s'étendant autour de la direction axiale selon une direction circonférentielle, et au moins une bride s'étendant depuis une extrémité du corps selon une direction d'extension, le procédé comprenant :
- la réalisation d'un moule de drapage comprenant une première surface de drapage et une deuxième surface de drapage, la première surface de drapage et la deuxième surface de drapage correspondant respectivement à au moins une portion de la première surface et de la deuxième surface déterminées suivant le procédé de détermination d'une géométrie d'un moule de drapage selon l'invention,
- la formation d'une ébauche fibreuse de la pièce à obtenir par dépôt d'une pluralité de strates fibreuses sur le moule de drapage comprenant la première surface de drapage et la deuxième surface de drapage, le dépôt étant réalisé par placement automatique de fibres,
- la mise en forme d'une portion de l'ébauche fibreuse formée sur la deuxième surface de drapage suivant la direction d'extension de sorte à obtenir une préforme fibreuse ayant la forme du corps et de la bride à réaliser, et
- la densification de la préforme par une matrice de manière à obtenir la pièce en matériau composite.

Ainsi, même si les première et deuxième surfaces « géométriques » déterminées lors du procédé de détermination de la géométrie du moule sont définies sur 360°, les première et deuxième surfaces « réelles » de drapage peuvent s'étendre circonférentiellement sur une distance plus courte, par exemple seulement sur 180° ou sur 120°, selon la pièce en matériau composite à réaliser.

L'invention concerne en outre un moule pour le drapage de structures fibreuses selon les caractéristiques de la revendication 7.

Le terme « surface de révolution » doit s'entendre comme une surface ayant la forme d'une surface de révolution complète, ou d'au moins une portion d'une surface de révolution complète.

Selon une caractéristique particulière de l'invention, le moule comprend plusieurs parties séparables délimitées de sorte à permettre le démoulage après le drapage.

### Brève description des dessins

[Fig. 1] La figure 1 est une vue en trois dimensions d'une pièce réalisable en utilisant un moule de drapage selon l'invention, comprenant un corps et au moins une bride.
[Fig. 2] La figure 2 est une vue schématique partielle en coupe de la pièce de la figure 1 pour la détermination des périmètres de cercles appartenant à la bride.
[Fig. 3] La figure 3 est une vue schématique partielle en coupe de la pièce de la figure 1 pour la détermination des longueurs de la bride.
[Fig. 4] La figure 4 est une vue en trois dimensions d'un moule selon l'invention permettant de réaliser la pièce de la figure 1 auquel sont superposés des éléments géométriques.
[Fig. 5] La figure 5 est une vue du moule illustré sur la figure 4 illustrant des ondulations circonférentielles.
[Fig. 6] La figure 6 est une première vue partielle en trois dimensions du moule illustré sur la figure 4 illustrant des courbures de correction.
[Fig. 7] La figure 7 est une deuxième vue partielle en trois dimensions du moule illustré sur la figure 4 illustrant des courbures de correction.
[Fig. 8] La figure 8 est une illustration schématique et partielle de la formation d'un ensemble drapé par placement automatique de fibres
[Fig. 9] La figure 9 est une vue en trois dimensions d'une ébauche fibreuse réalisée par drapage sur le moule illustré sur les figures 4 à 7.

### Description des modes de réalisation

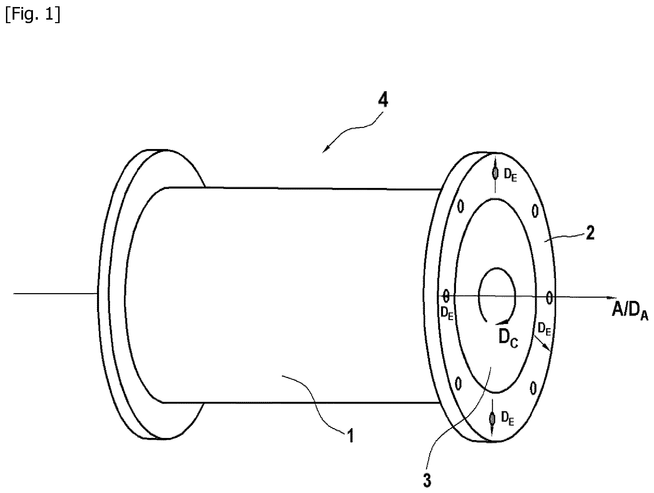

La figure 1 illustre une pièce 4 en matériau composite comprenant un corps 1 et au moins une bride 2. Le terme de « bride » peut désigner une collerette. La pièce 4 peut être un carter de moteur aéronautique comprenant deux brides. Le corps 1 est un volume de révolution dont l'axe de révolution A est dirigé selon une direction axiale D_{A}. Le corps 1 doit comprendre au moins une ouverture circulaire 3, dont le centre appartient à l'axe de révolution A dudit corps 1. Le corps 1 s'étend autour de son axe de révolution A selon une direction circonférentielle D_{C}. La direction circonférentielle D_{C} s'étend circulairement dans un plan perpendiculaire à la direction axiale D_{A}.

Dans l'exemple illustré sur la figure 1, le corps 1 est cylindrique. On ne sort bien entendu pas du cadre de l'invention si le corps est un autre volume de révolution comprenant une ouverture circulaire, par exemple si le corps présente une forme tronconique ou tubulaire, ou encore un profil quelconque axisymétrique. On ne sort pas non plus du cadre de l'invention si le corps est un volume de révolution incomplet, c'est-à-dire si sa forme ne correspond qu'à une portion d'un volume de révolution, comme par exemple un demi-cylindre.

La bride 2 est présente à une extrémité du corps 1 comprenant une ouverture circulaire 3, et s'étend depuis l'ouverture circulaire 3 du corps 1. La bride 2 présente une forme annulaire ou tronconique d'axe de révolution A dirigé selon la direction axiale D_{A}. La bride 2 s'étend depuis le corps 1 selon une direction d'extension D_{E}.

Ainsi, toute la pièce 4 en matériau composite est un volume de révolution d'axe A dirigé selon la direction axiale D_{A}. La direction d'extension D_{E} est définie pour chaque point de la jonction entre le corps 1 et la bride 2. Les directions d'extension D_{E} en deux points différents de ladite jonction peuvent être orientées différemment. Toutefois, les directions d'extensions D_{E} définies pour chaque point de la jonction entre le corps 1 et la bride 2 doivent être sécantes en un unique point appartenant à l'axe de révolution A de la pièce 4.

Dans l'exemple illustré sur la figure 1, la bride 2 forme un angle de 90° avec le corps 1 depuis lequel elle s'étend, ce qui correspond à une direction d'extension D_{E} perpendiculaire à la direction axiale D_{A}. On ne sort bien entendu pas du cadre de l'invention si la bride forme un angle inférieur à 90° avec le corps, ce qui correspond à un angle inférieur à 90° entre la direction d'extension et la direction axiale. On ne sort pas non plus du cadre de l'invention si la bride forme un angle supérieur à 90° avec le corps, si cet angle est suffisamment faible pour entraîner des problématiques de collisions lors du drapage automatique dudit angle. Typiquement, la présente invention peut présenter un intérêt particulier lorsque la bride forme un angle inférieur ou égal à 120° avec le corps depuis lequel elle s'étend, ce qui correspond à un angle inférieur ou égal à 120° entre la direction d'extension et la direction axiale.

On souhaite réaliser la pièce 4 en matériau composite illustrée sur la figure 1 par drapage de structures fibreuses sur une surface, selon la méthode bien connue de placement automatique de fibres (« AFP » en anglais, pour « automated fiber placement »). Toutefois, l'angle réduit formé entre la bride 2 et le corps 1 de la pièce 4 ne permet pas de réaliser un drapage directement sur une surface ayant la forme de la pièce finale 4. En effet, cet angle ne permet pas le passage complet d'une tête ou d'un rouleau de dépose automatique, et entraîne ainsi une dépose peu satisfaisante des structures fibreuses au fond de l'angle.

L'invention propose par conséquent de concevoir une géométrie de drapage particulière présentant un angle important voire plat entre la portion drapée destinée à former le corps 1 et la portion drapée destinée à former la bride 2, afin de pouvoir procéder au drapage automatique des structures fibreuses. Lorsque le drapage est achevé, on déforme la portion drapée destinée à former la bride 2 de sorte à former l'angle souhaité entre la bride 2 et le corps 1.

Afin de permettre la déformation de l'ensemble drapé au bon angle sans entraîner la création de tensions importantes dans l'ensemble drapé, et plus particulièrement à proximité du sommet de l'angle entre la bride 2 et le corps 1, il est nécessaire de concevoir une géométrie particulière pour le moule de drapage de la portion destinée à former la bride 2.

Dans un souci de simplification des figures et de la description, la première surface « géométrique » déterminée selon le procédé de détermination d'une géométrie de drapage de l'invention et la première surface « réelle » de drapage du moule sont identiques et confondues pour porter la même référence « 100 ». De même, la deuxième surface « géométrique » déterminée selon le procédé de détermination d'une géométrie de drapage de l'invention et la deuxième surface « réelle » de drapage du moule sont identiques et confondues pour porter la même référence « 200 ». Bien entendu, on ne sort pas du cadre de l'invention si les première et deuxièmes surfaces « réelles » de drapage ne correspondent qu'à une portion des première et deuxième surfaces « géométriques » déterminées.

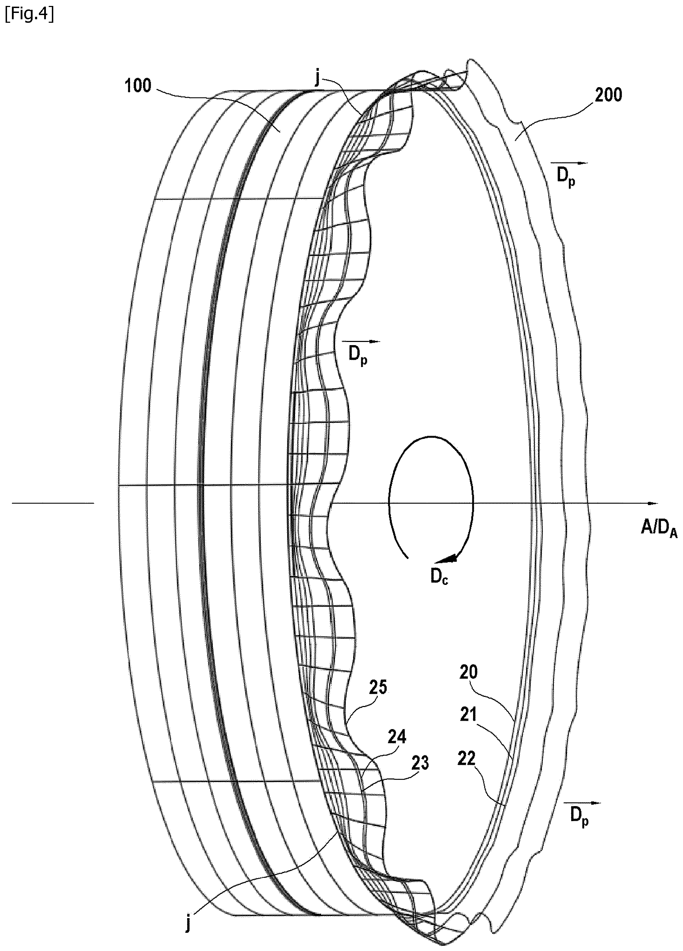

Le moule doit comprendre une première surface 100 de drapage, permettant de draper la portion destinée à former le corps 1, et une deuxième surface 200 de drapage, permettant de draper la portion destinée à former la bride 2, comme illustré sur les figures 4 à 7. La première surface 100 du moule est conçue classiquement de sorte à correspondre à la surface interne du corps 1 à fabriquer. Par conséquent, la première surface 100 est une surface de révolution d'axe A dirigé selon la direction axiale D_{A}, ladite première surface 100 s'étendant autour de la direction axiale D_{A} selon la direction circonférentielle D_{C}. Dans l'exemple notre exemple, la première surface 100 est donc cylindrique pour permettre la fabrication du corps 1 illustré sur la figure 1.

La deuxième surface 200 du moule s'étend dans le prolongement de la première surface 100 du moule, selon une direction de prolongement D_{P}.

De préférence, en tout point de la jonction entre la première surface et la deuxième surface, la tangente de la première surface est confondue avec la tangente de la deuxième surface. Dans le cas d'une première surface cylindrique, comme dans notre exemple, cela revient à ce que la direction de prolongement en tout point de la jonction entre la première surface et la deuxième surface soit orientée selon la direction axiale.

On ne sort bien entendu pas du cadre de l'invention si, en tout point de la jonction entre la première surface et la deuxième surface, la tangente de la première surface est légèrement inclinée par rapport à la tangente de la deuxième surface, pourvu que la jonction entre la première surface et la deuxième surface soit aisément accessible pour une tête ou un rouleau de dépose automatique de structures fibreuses. Ainsi, en tout point de la jonction entre la première surface et la deuxième surface, l'angle entre la tangente de la première surface et la tangente de la deuxième surface est typiquement supérieur ou égal à 120°, et de préférence égal à 180°.

La deuxième surface 200 du moule est conçue en plusieurs étapes. La première étape consiste à déterminer le périmètre d'un ou plusieurs cercles appartenant à la bride, lesdits cercles appartenant à un plan perpendiculaire à la direction axiale et ayant pour centre un point appartenant à l'axe de révolution, en fonction de leur distance par rapport à l'axe de révolution et de la position de leur centre sur l'axe de révolution.

Dans le cas où une arête nette réalise la jonction entre la bride et le corps, et où la direction d'extension est perpendiculaire à la direction axiale, tous les cercles appartenant à la bride sont situés dans le même plan. Ainsi, dans cette configuration particulière, la position du centre des cercles sur l'axe de révolution est identique pour chacun des cercles appartenant à la bride.

Dans le cas où un congé réalise la jonction entre la bride et le corps, ou dans le cas où la direction d'extension n'est pas perpendiculaire à la direction axiale, il est nécessaire de prendre en compte la position du centre des cercles appartenant à la bride sur l'axe de révolution. On considère que le congé qui réalise la jonction entre la bride et le corps fait partie de la bride.

Dans notre exemple, il faut tenir compte du congé entre le corps 1 et la bride 2. Ainsi, il faut donc déterminer le périmètre de cercles appartenant au congé de la bride 2 et de cercles appartenant à la partie de la bride 2 s'étendant dans la direction d'extension D_{E}.

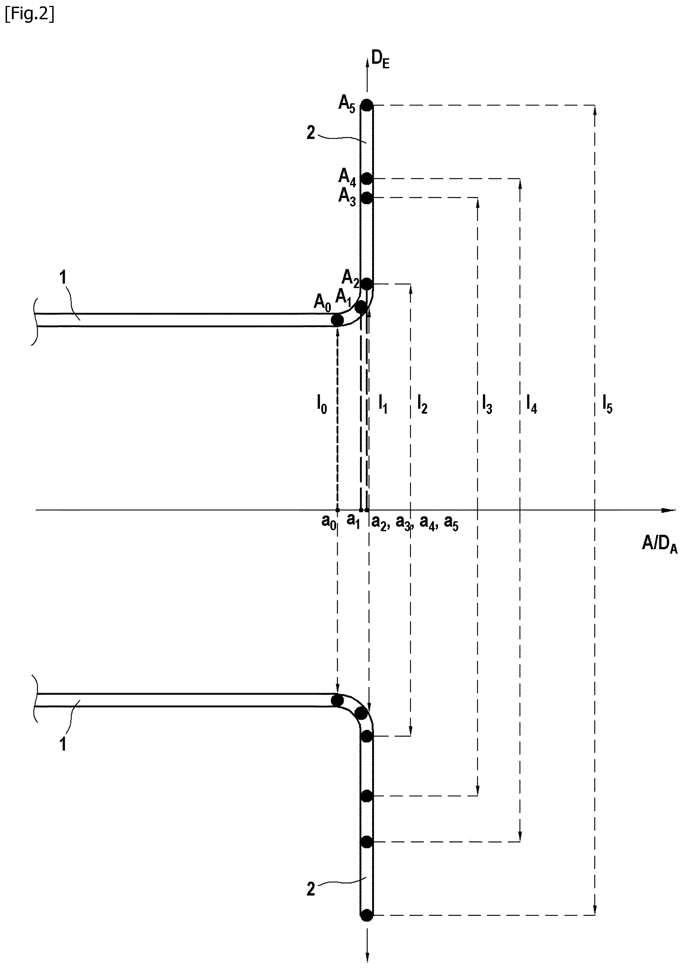

On peut choisir plusieurs points A₀, A₁, A₂, A₃, A₄, A₅ appartenant à la bride 2 disposés à des distances différentes de l'axe de révolution A de la pièce 4, comme illustré sur la figure 2. Les points choisis A₀, A₁, A₂, A₃, A₄, A₅ comprennent de préférence un point A₀ appartenant à la jonction entre le corps 1 et la bride 2 et un point A₅ appartenant à l'extrémité de la bride 2. Comme un congé est présent, il est nécessaire de discrétiser le congé. Ainsi, les points choisis A₀, A₁, A₂, A₃, A₄, A₅ comprennent de préférence un point A₁ appartenant au congé et un point A2 présent à l'extrémité du congé opposée à la jonction entre la bride 2 et le corps 1. On ne sort bien entendu pas du cadre de l'invention si plus ou moins de points sont choisis, ou si leur placement est différent.

Chacun des points A₀, A₁, A₂, A₃, A₄, A₅ est associé respectivement à une position a₀, a₁, a₂, a₃, a₄, a₅ sur l'axe de révolution A de la pièce 4, comme illustré sur la figure 2. Chacun des points A₀, A₁, A₂, A₃, A₄, A₅ est également associé à un cercle comprenant ledit point dont le centre appartient à l'axe de révolution A. Ainsi, chacun des points A₀, A₁, A₂, A₃, A₄, A₅ est respectivement associé à un cercle dont le centre a pour position a₀, a₁, a₂, a₃, a₄, a₅. Chaque cercle associé à un point A₀, A₁, A₂, A₃, A₄, A₅ présente respectivement un périmètre de longueur I₀, I₁, I₂, I₃, I₄, I₅.

La deuxième étape consiste à déterminer une ou plusieurs longueurs curvilignes depuis la jonction entre la bride et le corps jusqu'à un ou plusieurs des cercles appartenant à la bride, lesdits cercles appartenant à un plan perpendiculaire à la direction axiale et ayant pour centre un point appartenant à l'axe de révolution, en fonction de leur distance par rapport à l'axe de révolution et de la position de leur centre sur l'axe de révolution.

Dans le cas où une arête nette réalise la jonction entre la bride et le corps, les longueurs curvilignes à déterminer entre la jonction et les cercles appartenant à la bride sont des longueurs rectilignes s'étendant selon la direction d'extension D_{E}. Ainsi, dans cette configuration, les longueurs depuis la jonction sont aisées à déterminer.

Dans le cas où un congé réalise la jonction entre la bride et le corps, les longueurs curvilignes à déterminer entre la jonction et les cercles appartenant à la bride ne sont pas rectilignes.

Dans notre exemple, il faut tenir compte du congé entre le corps 1 et la bride 2. Ainsi, il faut donc déterminer les longueurs curvilignes entre la jonction et les cercles appartenant à la bride 2.

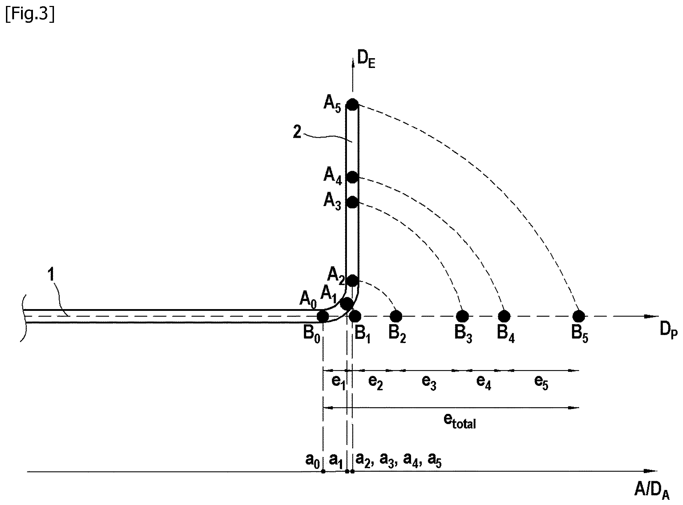

On reprend les points A₀, A₁, A₂, A₃, A₄, A₅ pour lesquels les longueurs de périmètre associées I₀, I₁, I₂, I₃, I₄, I₅ sont connues. En reportant les longueurs curvilignes entre les points A₀, A₁, A₂, A₃, A₄, A₅ sur la direction de prolongement D_{P}, comme illustré sur la figure 3, on obtient un ensemble correspondant de points B₀, B₁, B₂, B₃, B₄, B₅ séparés par les longueurs curvilignes e₁, e₂, e₃, e₄, e₅. Ainsi, la longueur curviligne depuis la jonction jusqu'au cercle correspondant au point A₄ sera la somme des longueurs e₁, e₂ et e₃. La longueur curviligne totale eₜₒₜₐₗ de la bride 2 depuis la jonction jusqu'à son extrémité sera donc la longueur entre B₀ et B₅, soit la somme des longueurs e₁, e₂, e₃, e₄ et e₅, comme illustré sur la figure 3.

Par conséquent, chaque longueur de périmètre I₀, I₁, I₂, I₃, I₄, I₅ est associée à une longueur curviligne définie à partir de la jonction ayant respectivement pour valeur 0, e₁, e₁+e₂, e₁+e₂+e₃, e₁+e₂+e₃+e₄, eₜₒₜₐₗ.

De manière générale, la première étape et la deuxième étape peuvent réalisées simultanément, ou l'une après l'autre dans un ordre indifférent. A l'issue des deux premières étapes, chaque longueur curviligne partant de la jonction est associée à une longueur de périmètre.

La troisième étape consiste à déterminer la géométrie de la deuxième surface 200 du moule, qui s'étend dans le prolongement de la première surface 100 du moule selon la direction de prolongement D_{P}.

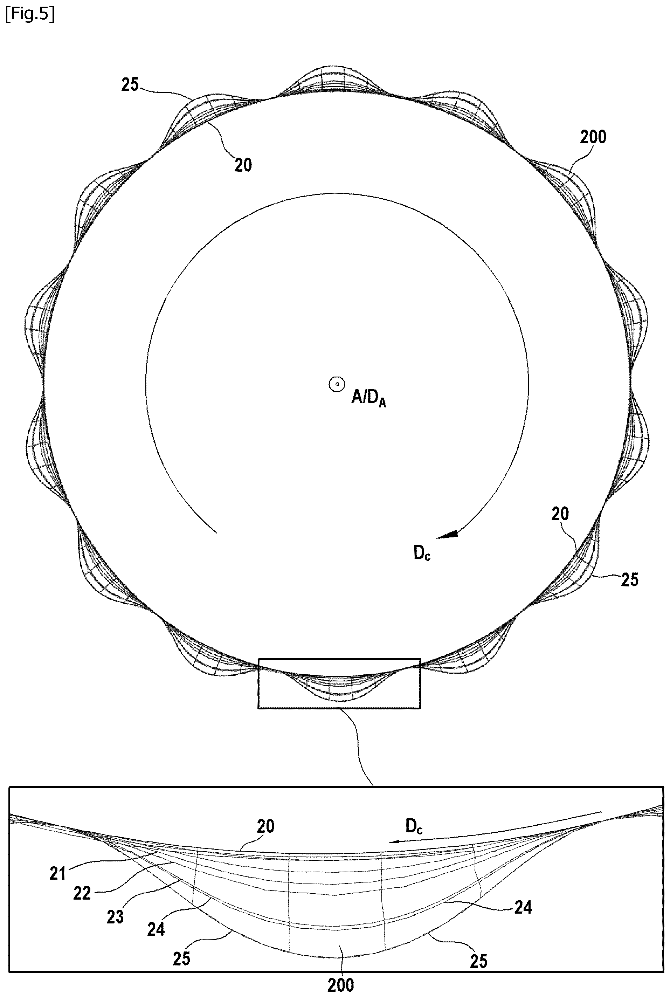

Comme illustré sur la figure 5, la deuxième surface 200 est conçue de sorte à présenter des ondulations dans la direction circonférentielle D_{C}. Ainsi, la deuxième surface 200 présente une pluralité de courbes fermées 21, 22, 23, 24, 25 d'ondulations circonférentielles à la suite les unes des autres dans le sens de la direction axiale D_{A}. Une courbe fermée comprend l'ensemble des points situés à une même distance curviligne de la jonction j entre la première surface 100 et la deuxième surface 200, ladite distance curviligne appartenant à la deuxième surface 200.

Les ondulations d'une même courbe fermée 21, 22, 23, 24, 25 ont une période régulière dans la direction circonférentielle D_{C}. Les ondulations des courbes fermées 21, 22, 23, 24, 25 sont composées d'une alternance continue de courbes concaves et convexes selon la direction circonférentielle D_{C}. Les ondulations des courbes fermées 21, 22, 23, 24, 25 sont de préférence périodiques, et éventuellement sinusoïdales ou globalement sinusoïdales, comme illustré sur la figure 5.

Les ondulations d'une même courbe fermée 21, 22, 23, 24, 25 présentent une pluralité de maximums et une pluralité de minimums, la pluralité de maximums étant répartis sur un cercle dont le centre appartient à l'axe de révolution A de la première surface 100, et la pluralité de minimums étant répartis sur un cercle dont le centre appartient à l'axe de révolution A de la première surface 100. Ainsi, les ondulations d'une même courbe fermée 21, 22, 23, 24, 25 ont une amplitude constante dans la direction circonférentielle D_{C}. Les minimums sont définis comme les points des courbes fermées 21, 22, 23, 24, 25 les plus proches de l'axe de révolution A, et les maximums sont définis comme les points des courbes fermées 21, 22, 23, 24, 25 les plus éloignés de l'axe de révolution A.

Les points d'inflexion d'une même courbe fermée 21, 22, 23, 24, 25 d'ondulations sont répartis sur un cercle dont le centre appartient à l'axe de révolution de la première surface.

L'amplitude et le nombre des ondulations des courbes fermées 21, 22, 23, 24, 25 sont choisis de sorte à permettre le passage de la tête de dépose automatique de fibre en tout point de la deuxième surface 200. Ainsi, l'amplitude ne doit pas être trop importante afin de permettre le passage de ladite tête, ou de pouvoir déposer plusieurs mèches à la fois.

Dans l'exemple illustré sur les figures 4 à 7, les minimums de toutes les courbes fermées d'ondulations circonférentielles sont répartis sur des cercles de rayons identiques, et de même rayon que le cercle 20 formant la jonction j entre la première surface 100 et la deuxième surface 200. On ne sort bien entendu pas du cadre de l'invention si les minimums de toutes les courbes fermées d'ondulations circonférentielles sont répartis sur des cercles de rayons identiques, mais de rayon supérieur au rayon du cercle formant la jonction entre la première surface et la deuxième surface. On ne sort pas non plus du cadre de l'invention si les minimums de chaque courbe fermée d'ondulations circonférentielle sont répartis sur des cercles de rayons différents, pourvu que lesdits rayons soient supérieurs au rayon du cercle formant la jonction entre la première surface et la deuxième surface.

On ne sort pas non plus du cadre de l'invention si ce sont les points d'inflexions de toutes les courbes fermées d'ondulations circonférentielles qui sont répartis sur des cercles de rayons identiques, et de même rayon que le cercle formant la jonction entre la première surface et la deuxième surface.

Plus l'on s'éloigne de la jonction j entre la première surface 100 et la deuxième surface 200 dans la direction axiale D_{A}, plus les courbes fermées 21, 22, 23, 24, 25 d'ondulations circonférentielles présentent progressivement une grande amplitude, comme illustré sur les figures 4 à 7.

La longueur curviligne de chacune des courbes fermées 21, 22, 23, 24, 25 d'ondulations circonférentielles dépend de la distance curviligne de ladite courbe fermée 21, 22, 23, 24, 25 par rapport à la jonction j entre la première surface 100 et la deuxième surface 200. En utilisant les couples périmètre/longueur curviligne définie à partir de la jonction (I₁ ; e₁), (I₂ ; e₁+e₂), (I₃ ; e₁+e₂+e₃), (I₄ ; e₁+e₂+e₃+e₄), (I₅ ; eₜₒₜₐₗ) déterminés à l'issue des première et deuxième étapes, on obtient que la longueur curviligne d'une courbe fermée 21, 22, 23, 24, 25 d'ondulations circonférentielles située à une distance curviligne donnée de la jonction j est la longueur de périmètre I₁, I₂, I₃, I₄, I₅ précédemment associée à ladite distance curviligne e₁, e₁+e₂, e₁+e₂+e₃, e₁+e₂+e₃+e₄, eₜₒₜₐₗ définie à partir de la jonction j.

Ainsi les courbes fermées 21, 22, 23, 24, 25 d'ondulations circonférentielles ont respectivement une longueur curviligne I₁, I₂, I₃, I₄, I₅ lorsque qu'elles sont éloignées de la jonction j respectivement d'une distance curviligne e₁, e₁+e₂, e₁+e₂+e₃, e₁+e₂+e₃+e₄, eₜₒₜₐₗ.

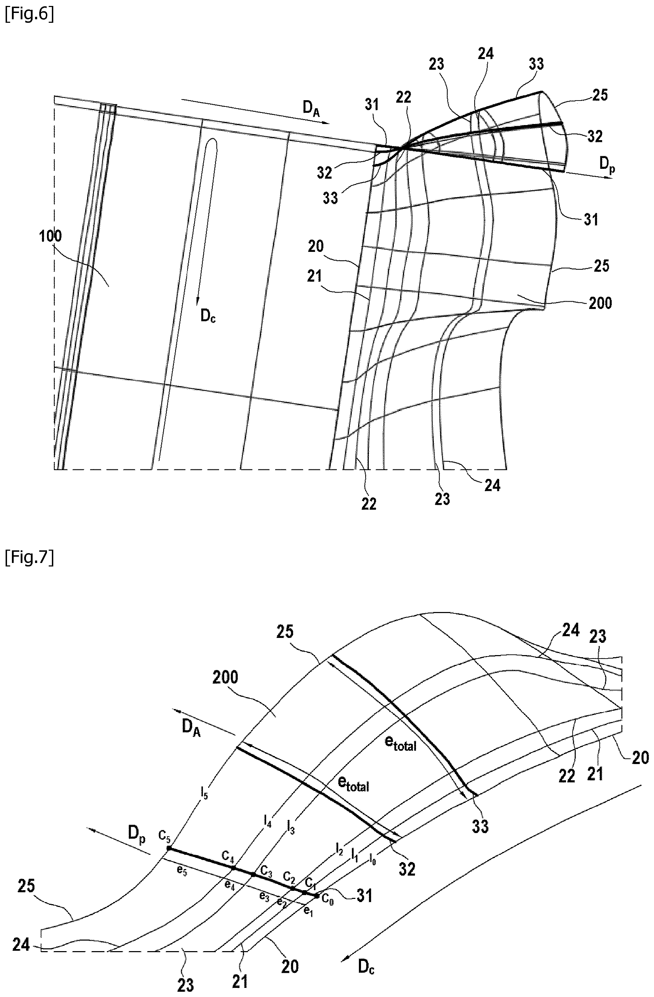

Comme illustré sur les figures 6 et 7, la deuxième surface 200 est conçue de sorte à présenter des courbures 32, 33 dans la direction de prolongement D_{P}. Ainsi, les distances e₁, e₂, e₃, e₄, eₜₒₜₐₗ peuvent ne pas être rectilignes selon leur position sur la deuxième surface 200. Ces courbures 32, 33, dites « de correction » sont nécessaires afin de limiter les contraintes lors de la déformation de l'ensemble drapé, principalement à la jonction entre le corps et la bride. En effet, si les distances e₁, e₂, e₃, e₄, eₜₒₜₐₗ étaient rectilignes, comme c'est le cas dans l'état antérieur, la distance entre la jonction j et l'extrémité de la deuxième surface 200 varierait selon sa position par rapport aux ondulations circonférentielles.

Par exemple, si les minimums de toutes les courbes fermées d'ondulations circonférentielles sont répartis sur des cercles de même rayon que le cercle 20 formant la jonction j entre la première surface 100 et la deuxième surface 200 comme dans notre exemple (voir figure 5), la distance rectiligne entre la jonction j et l'extrémité de la deuxième surface 200 serait plus courte dans le creux des ondulations circonférentielles et plus grande sur la bosse des ondulations circonférentielles. Ainsi, au moment de la déformation de l'ensemble drapé, il manquerait de la longueur dans la direction d'extension D_{E} à plusieurs endroits de la bride 2, ce qui créerait des contraintes dans le matériau composite de la pièce 4.

Les courbures de correction 32, 33 présentées par la deuxième surface 200 dans la direction de prolongement D_{P} présentent au moins un point d'inflexion, comme illustré sur la figure 6. Les courbures de correction 32, 33 présentées par la deuxième surface 200 dans la direction de prolongement D_{P} peuvent être des portions d'une courbe d'ondulations oscillant entre un maximum et un minimum.

La deuxième surface 200 peut également comprendre des longueurs rectilignes 31, qui s'étendent depuis la jonction j vers l'extrémité de la surface 200 selon la direction de prolongement D_{P}.

Toutes les courbures de correction 32, 33 et longueurs rectilignes 31 de la deuxième surface 200 dirigées selon la direction de prolongement D_{P} présentent une longueur curviligne identique, de valeur eₜₒₜₐₗ déterminée lors des étapes précédentes, comme illustré sur la figure 7. En outre, la distance curviligne parcourue par une courbure de correction 32, 33 ou par une longueur rectiligne 31 selon la direction de prolongement D_{P} entre la jonction j et une courbe fermée 21, 22, 23, 24 ou 25 d'ondulations circonférentielles aura respectivement pour valeur e₁, e₁+e₂, e₁+e₂+e₃, e₁+e₂+e₃+e₄, eₜₒₜₐₗ.

On obtient ainsi un ensemble de points C₀, C₁, C₂, C₃, C₄, C₅ situés à l'intersection entre une longueur rectiligne 31 (ou une courbure de correction 32, 33) et chacune des courbes fermées 21, 22, 23, 24, 25 d'ondulations circonférentielles. Lorsque la portion drapée sur la deuxième surface 200 sera déformée dans la direction d'extension D_{E}, chaque point au contact d'un point C₀, C₁, C₂, C₃, C₄, C₅ sera respectivement situé à l'emplacement du point A₀, A₁, A₂, A₃, A₄, A₅ de la bride choisi lors de la première ou de la deuxième étape.

Finalement, les paramètres des ondulations circonférentielles et des courbures de correction 32, 33 de la deuxième surface 200, comme l'amplitude ou les rayons de courbure, sont choisis de sorte à permettre le passage de la tête de dépose automatique de fibre en tout point de la deuxième surface 200.

La conception d'une géométrie de drapage décrite précédemment permet ainsi de réaliser un moule adapté pour un drapage automatique de fibres (AFP). Le moule peut être réalisé par fabrication additive, ou selon les moyens de fabrication usuels tels que l'usinage ou la fonderie. Le moule peut se présenter en plusieurs parties séparables plutôt que d'un seul tenant, afin de faciliter la ou les opérations de démoulage.

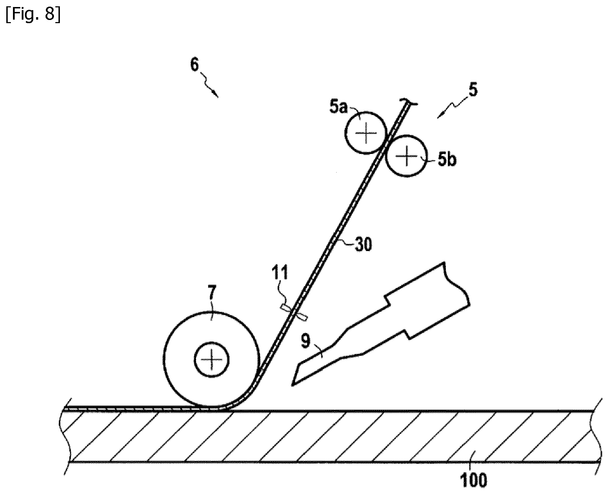

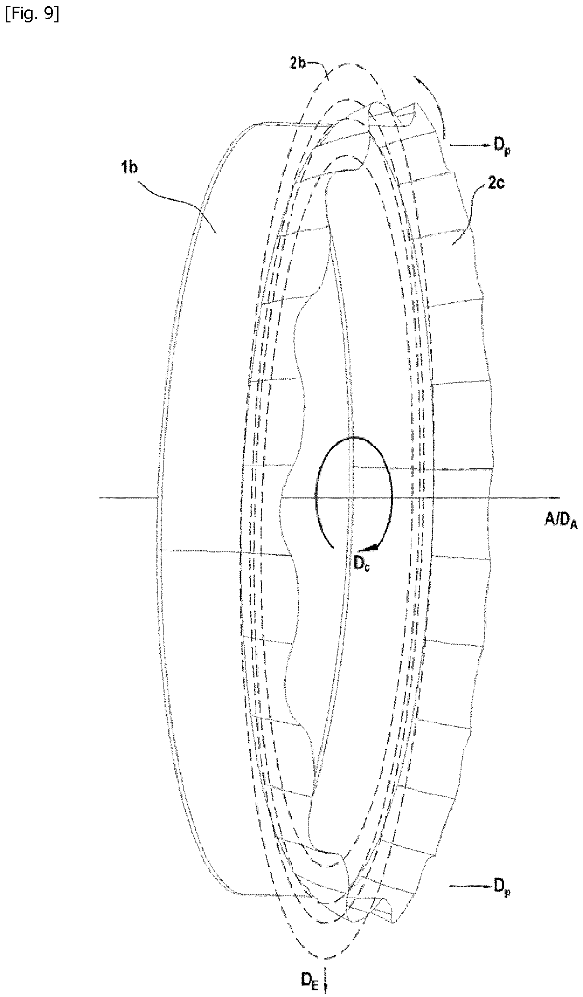

Nous allons maintenant décrire en relation avec les figures 8 et 9 un procédé de fabrication d'une pièce en matériau composite comprenant au moins une étape de drapage par placement automatique de fibres sur un moule conçu tel que décrit précédemment.

La figure 8 illustre schématiquement la structure d'une tête de dépose 1 d'un dispositif de mise en œuvre d'une technique AFP. La structure de la tête de dépose 1 est bien connue. La tête de dépose 1 est alimentée par une bande ou une mèche fibreuse 30.

La bande ou la mèche fibreuse 30 peut être sèche ou imprégnée. La bande ou la mèche fibreuse 30 peut par exemple être imprégnée par une suspension aqueuse comprenant des particules de précurseur de matrice, être imprégnée par un polymère thermodurcissable ou être imprégnée par un polymère thermoplastique, comme décrit dans le document FR3062336A1.

La bande ou la mèche fibreuse 30 peut être acheminée par un élément de convoyage 5 jusqu'à un élément d'application de la pression 7 situé du côté des surfaces 100 et 200 du moule de drapage. L'élément de convoyage 5 est ici sous la forme d'un couple de rouleaux contrarotatifs 5a et 5b entre lesquels la bande ou la mèche 30 est présente. L'élément de convoyage 5 permet de faire avance la bande ou la mèche 30 jusqu'à l'élément d'application de la pression 7. L'élément d'application de la pression 7 applique une pression sur la bande ou la mèche 30 afin de réaliser un dépôt sur les première et deuxième surfaces 100 et 200 du moule de drapage. L'élément d'application de la pression 7 est ici sous la forme d'un rouleau.

La tête de dépose 1 peut, en outre, comporter un élément chauffant 9 situé au voisinage de l'élément d'application de la pression 7. Cet élément chauffant 9 permet, dans le cas d'une bande ou d'une mèche 30 imprégnée par un polymère thermoplastique ou thermodurcissable, de chauffer la bande ou la mèche 30 imprégnée lors de son dépôt afin de fluidifier le polymère et ainsi de conférer le pouvoir d'adhésion souhaité à la bande ou à la mèche 30 déposée.

Lors du dépôt, la tête de dépose 1 est mobile afin d'appliquer la bande ou la mèche 30 sur une première zone déterminée du moule de drapage, par exemple sur une portion de la première surface 100 du moule. Une fois l'application réalisée sur cette première zone, un élément de découpe 11 de la tête de dépose 1 coupe la bande ou la mèche 30. Après cette découpe, on obtient ainsi le dépôt d'une première structure fibreuse, formée par un premier tronçon de la bande ou de la mèche 30, sur la première zone du moule.

La formation de l'ébauche est ensuite poursuivie par avancée de la bande ou de la mèche 30 dans la tête de dépose 1 jusqu'à l'élément d'application de la pression 7 par actionnement de l'élément de convoyage 5. La tête de dépose 1 peut être déplacée afin de réaliser le dépôt de la mèche ou de la bande 30 sur une deuxième zone du moule. Le dépôt d'une deuxième structure fibreuse, formée par un deuxième tronçon de la bande 30, sur la deuxième zone du moule est alors obtenu d'une manière similaire à celle décrite précédemment.

La réalisation de l'ébauche est ensuite poursuivie par dépôt de plusieurs autres structures fibreuses de la même manière que décrite précédemment, jusqu'à recouvrir la première surface 100 et la deuxième surface 200.

Des traitements chimiques ou thermiques peuvent ensuite être réalisés sur l'ébauche selon la nature des structures fibreuses drapées.

On obtient alors une ébauche fibreuse réalisée par drapage comme illustré sur la figure 9, comprenant une première portion 1b ayant été drapée sur la première surface 100, et une deuxième portion 2c ayant été drapée sur la deuxième surface 200. La première portion 1b et la deuxième portion 2c forment une ébauche fibreuse.

On procède ensuite à la déformation de l'ébauche fibreuse de sorte à obtenir une préforme fibreuse, en déformant la deuxième portion 2c drapée sur la deuxième surface 200 de sorte à l'étendre selon la direction d'extension D_{E}. La deuxième portion 2c est alors positionnée de sorte à avoir la géométrie 2b de la bride 2 à réaliser. Grâce à la géométrie particulière de la deuxième surface 200 utilisée pour draper la deuxième portion 2c, la deuxième portion 2c se déforme parfaitement de sorte à ce que chaque courbe fermée d'ondulations 21, 22, 23, 24, 25 devienne un cercle de la bride 2 à réaliser présentant un diamètre adapté et de sorte à ce que chaque courbure de correction 32, 33 s'étende dans la direction d'extension D_{E}. Ainsi, il n'y a pas de contraintes importantes dans les fibres de la deuxième portion, en particulier à la jonction entre la première portion 1c et la deuxième portion 2c déformée aux dimensions de la bride 2 à réaliser.

On peut ensuite procéder au traitement thermique de la préforme fibreuse ainsi obtenue afin de former la matrice, si cette étape n'a pas encore été réalisée, de sorte à obtenir la pièce finale 4, ou au moins une pièce intermédiaire proche de la pièce finale 4.

Les procédés décrits précédemment peuvent également être adaptés pour la réalisation d'une pièce en matériau composite comprenant un corps présentant une ouverture selon une direction axiale, ladite pièce comprenant en outre une bride présente autour de ladite ouverture selon une direction circonférentielle et s'étendant selon une direction d'extension sensiblement dirigée selon la direction axiale. Une telle pièce est par exemple illustrée sur la figure 5B du document WO2012/046020. Par exemple, on ne sort pas du cadre de l'invention si la pièce en matériau composite présente globalement une forme de disque percé, avec une protubérance cylindrique présente circonférentiellement autour de l'orifice. Dans ce cas, la première surface présentera une forme de couronne (au sens géométrique) ayant la forme du corps à réaliser, qui encerclera la deuxième surface en forme générale de couronne présentant des ondulations circonférentielles et des courbures de correction.

## Revendications

1. Procédé de détermination d'une géométrie d'un moule de drapage pour la réalisation d'une ébauche d'une pièce en matériau composite (4) comprenant un corps (1) de révolution d'axe A dirigé selon une direction axiale (D_{A}), ledit corps (1) s'étendant autour de la direction axiale (D_{A}) selon une direction circonférentielle (D_{C}), et au moins une bride (2) s'étendant depuis une extrémité du corps (1) selon une direction d'extension (D_{E}), le procédé comprenant :
- la détermination d'une première surface (100) de révolution d'axe A dirigé selon la direction axiale (D_{A}) ayant la forme du corps (1) à réaliser, ladite première surface (100) s'étendant autour de la direction axiale (D_{A}) selon la direction circonférentielle (Dc),
- la détermination d'une deuxième surface (200) située dans le prolongement de la première surface (100) selon une direction de prolongement (D_{P}), l'angle formé entre la direction axiale (D_{A}) et la direction de prolongement (D_{P}) étant supérieur à l'angle formé entre la direction axiale (D_{A}) et la direction d'extension (D_{E}), la deuxième surface (200) présentant des courbes fermées (21, 22, 23, 24, 25) d'ondulations selon la direction circonférentielle (D_{C}) se suivant successivement selon la direction de prolongement (D_{P}), chaque courbe fermée (21, 22, 23, 24, 25) d'ondulations circonférentielles correspondant à un cercle appartenant à la bride (2) à réaliser, la longueur curviligne de ladite courbe fermée (21, 22, 23, 24, 25) correspondant à la valeur du périmètre (I₁, I₂, I₃, I₄, I₅) dudit cercle,
le procédé étant **caractérisé en ce que** la deuxième surface (200) présente en outre des courbures de correction (32, 33) dans la direction de prolongement (D_{P}), de sorte que tous les points de chaque courbe fermée (21, 22, 23, 24, 25) d'ondulations circonférentielles sont à une même distance curviligne de la jonction (j) entre la première surface (100) et la deuxième surface (200), ladite distance curviligne appartenant à la deuxième surface (200) et ayant une valeur correspondant à la distance curviligne (e₁, e₁+e₂, e₁+e₂+e₃, e₁+e₂+e₃+e₄, eₜₒₜₐₗ) entre le cercle appartenant à la bride (2) à réaliser correspondant à ladite courbe fermée (21, 22, 23, 24, 25), et la jonction entre la bride (2) et le corps (1) à réaliser.

2. Procédé de détermination selon la revendication 1, dans lequel les points d'inflexion de chaque courbe fermée (21, 22, 23, 24, 25) d'ondulations circonférentielles sont compris sur un même cercle.

3. Procédé de détermination selon la revendication 1 ou 2, dans lequel les minimums de chaque courbe fermée (21, 22, 23, 24, 25) d'ondulations circonférentielles sont compris sur un même cercle dont le rayon est supérieur ou égal au rayon du cercle (20) réalisant la jonction (j) entre la première surface (100) et la deuxième surface (200).

4. Procédé de détermination selon l'une quelconque des revendications 1 à 3, dans lequel les courbures de correction (33) situées sur les maximums des ondulations circonférentielles sont plus courbées que les courbures de correction (32) situées sur les points d'inflexion des ondulations circonférentielles.

5. Procédé de détermination selon l'une quelconque des revendications 1 à 4, dans lequel la bride (2) à réaliser comprend un congé à sa jonction avec le corps (1) à réaliser.

6. Procédé de fabrication d'une pièce en matériau composite (4) comprenant un corps (1) de révolution d'axe A dirigé selon une direction axiale (D_{A}), ledit corps (1) s'étendant autour de la direction axiale (D_{A}) selon une direction circonférentielle (D_{C}), et au moins une bride (2) s'étendant depuis une extrémité du corps (1) selon une direction d'extension (D_{E}), le procédé comprenant :
- la réalisation d'un moule de drapage comprenant une première surface de drapage et une deuxième surface de drapage, la première surface de drapage et la deuxième surface de drapage correspondant respectivement à au moins une portion de la première surface (100) et de la deuxième surface (200) déterminées suivant le procédé de détermination d'une géométrie d'un moule de drapage selon l'une quelconque des revendications 1 à 5,
- la formation d'une ébauche fibreuse de la pièce (4) à obtenir par dépôt d'une pluralité de strates fibreuses sur le moule de drapage comprenant la première surface de drapage et la deuxième surface de drapage, le dépôt étant réalisé par placement automatique de fibres,
- la mise en forme d'une portion (2c) de l'ébauche fibreuse formée sur la deuxième surface de drapage suivant la direction d'extension (D_{E}) de sorte à obtenir une préforme fibreuse ayant la forme du corps (1) et de la bride (2) à réaliser, et
- la densification de la préforme par une matrice de manière à obtenir la pièce en matériau composite (4).

7. Moule pour le drapage de structures fibreuses comprenant une première surface de drapage (100) et une deuxième surface de drapage (200) s'étendant dans le prolongement de la première surface de drapage selon une direction de prolongement (D_{P}), la première surface de drapage étant une surface de révolution d'axe A dirigé selon une direction axiale (D_{A}), ladite première surface de drapage s'étendant autour de la direction axiale (D_{A}) selon une direction circonférentielle (Dc), le moule étant tel que la deuxième surface de drapage (200) présente des ondulations dans la direction circonférentielle (D_{C}) et des courbures de correction (32, 33) dans la direction de prolongement (D_{P}), les courbures de correction (32,33) situées sur les maximums des ondulations circonférentielles étant plus courbées que les courbures de correction situées sur les points d'inflexion des ondulations circonférentielles, de sorte que tous les points de chaque courbe fermée (21, 22, 23, 24, 25) d'ondulations circonférentielles s'étendant suivant la direction circonférentielle (D_{C}) sont à une même distance curviligne de la jonction (j) entre la première surface de drapage (100) et la deuxième surface de drapage, (200) ladite distance curviligne appartenant à la deuxième surface de drapage.

8. Moule selon la revendication 7, comprenant plusieurs parties séparables délimitées de sorte à permettre le démoulage après le drapage.

## Patentansprüche

1. Verfahren zur Bestimmung einer Geometrie einer Drapierform zur Herstellung eines Vorformlings eines Bauteils aus Verbundmaterial (4), umfassend einen Rotationskörper (1) mit Achse A, ausgerichtet gemäß einer axialen Richtung (D_{A}), wobei sich der Körper (1) um die axiale Richtung (D_{A}) gemäß einer Umfangsrichtung (D_{C}) erstreckt, und mindestens einen Flansch (2), der sich von einem Ende des Körpers (1) gemäß einer Ausdehnungsrichtung (D_{E}) erstreckt, wobei das Verfahren umfasst:
- das Bestimmen einer ersten Rotationsfläche (100) mit Achse A, ausgerichtet gemäß der axialen Richtung (D_{A}), mit der Form des herzustellenden Körpers (1), wobei sich die erste Fläche (100) um die axiale Richtung (D_{A}) gemäß der Umfangsrichtung (D_{C}) erstreckt,
- das Bestimmen einer zweiten Fläche (200), die sich in Verlängerung der ersten Fläche (100) gemäß einer Verlängerungsrichtung (D_{P}) befindet, wobei der Winkel zwischen der axialen Richtung (D_{A}) und der Verlängerungsrichtung (D_{P}) größer ist als der Winkel zwischen der axialen Richtung (D_{A}) und der Ausdehnungsrichtung (D_{E}), wobei die zweite Fläche (200) geschlossene Wellenlinien (21, 22, 23, 24, 25) gemäß der Umfangsrichtung (D_{C}) aufweist, die sich nacheinander gemäß der Verlängerungsrichtung (D_{P}) folgen, wobei jede geschlossene umlaufende Wellenlinie (21, 22, 23, 24, 25) einem Kreis des herzustellenden Flansches (2) entspricht, wobei die Bogenlänge der geschlossenen Linie (21, 22, 23, 24, 25) dem Wert des Umfangslinie (l₁, l₂, l₃, l₄, l₅) des jeweiligen Kreises entspricht,
wobei das Verfahren **dadurch gekennzeichnet ist, dass** die zweite Fläche (200) ferner Korrekturkrümmungen (32, 33) in Verlängerungsrichtung (D_{P}) aufweist, so dass alle Punkte jeder geschlossenen umlaufenden Wellenlinie (21, 22, 23, 24, 25) denselben Bogenabstand von der Verbindung (j) zwischen der ersten Fläche (100) und der zweiten Fläche (200) haben, wobei dieser Bogenabstand zu der zweiten Fläche (200) gehört und einen Wert aufweist, der dem Bogenabstand (e₁, e₁+e₂, e₁+e₂+e₃, e₁+e₂+e₃+e₄, eₜₒₜₐₗ) zwischen dem Kreis des herzustellenden Flansches (2), der der geschlossenen Linie (21, 22, 23, 24, 25) entspricht, und der Verbindung zwischen dem herzustellenden Flansch (2) und Körper (1) entspricht.

2. Bestimmungsverfahren nach Anspruch 1, wobei die Wendepunkte jeder geschlossenen umlaufenden Wellenlinie (21, 22, 23, 24, 25) auf demselben Kreis liegen.

3. Bestimmungsverfahren nach Anspruch 1 oder 2, wobei die Minima jeder geschlossenen umlaufenden Wellenlinie (21, 22, 23, 24, 25) auf demselben Kreis liegen, dessen Radius größer oder gleich dem Radius des Kreises (20) ist, der die Verbindung (j) zwischen der ersten Fläche (100) und der zweiten Fläche (200) bildet.

4. Bestimmungsverfahren nach einem der Ansprüche 1 bis 3, wobei die Korrekturkrümmungen (33), die auf den Maxima der umlaufenden Wellenlinien liegen, stärker gekrümmt sind als die Korrekturkrümmungen (32), die auf den Wendepunkten der umlaufenden Wellenlinien liegen.

5. Bestimmungsverfahren nach einem der Ansprüche 1 bis 4, wobei der herzustellende Flansch (2) an seiner Verbindung mit dem herzustellenden Körper (1) eine Abrundung aufweist.

6. Verfahren zur Herstellung eines Bauteils aus Verbundmaterial (4), umfassend einen Rotationskörper (1) mit Achse A, ausgerichtet gemäß einer axialen Richtung (D_{A}), wobei sich der Körper (1) um die axiale Richtung (D_{A}) gemäß einer Umfangsrichtung (D_{C}) erstreckt, und mindestens einen Flansch (2), der sich von einem Ende des Körpers (1) gemäß einer Ausdehnungsrichtung (D_{E}) erstreckt, wobei das Verfahren umfasst:
- das Herstellen einer Drapierform, die eine erste Drapierfläche und eine zweite Drapierfläche umfasst, wobei die erste Drapierfläche und die zweite Drapierfläche jeweils mindestens einem Abschnitt der gemäß dem Verfahren zur Bestimmung einer Geometrie einer Drapierform nach einem der Ansprüche 1 bis 5 bestimmten ersten Fläche (100) und zweiten Fläche (200) entsprechen,
- das Bilden eines Faser-Vorformlings des zu fertigenden Bauteils (4) durch Ablegen einer Vielzahl von Faserscharen auf der Drapierform, die die erste Drapierfläche und die zweite Drapierfläche umfasst, wobei das Ablegen durch automatisiertes Faserlegen erfolgt,
- das Umformen eines Abschnitts (2c) des auf der zweiten Drapierfläche gebildeten Faser-Vorformlings gemäß der Ausdehnungsrichtung (D_{E}), so dass eine Faservorform mit der Form des herzustellenden Körpers (1) und des herzustellenden Flansches (2) erhalten wird, und
- das Verdichten der Vorform durch eine Matrix, um das Bauteil aus Verbundmaterial (4) zu erhalten.

7. Form zum Drapieren von Faserstrukturen, umfassend eine erste Drapierfläche (100) und eine zweite Drapierfläche (200), die sich in Verlängerung der ersten Drapierfläche gemäß einer Verlängerungsrichtung (D_{P}) erstreckt, wobei die erste Drapierfläche eine Rotationsfläche mit Achse A ist, die gemäß einer axialen Richtung (D_{A}) ausgerichtet ist, wobei sich die erste Drapierfläche um die axiale Richtung (D_{A}) gemäß einer Umfangsrichtung (D_{C}) erstreckt,
wobei die Form derart ist, dass die zweite Drapierfläche (200) umlaufende Wellen (D_{C}) und Korrekturkrümmungen (32, 33) in Verlängerungsrichtung (D_{P}) aufweist, wobei die Korrekturkrümmungen (32, 33), die auf den Maxima der umlaufenden Wellen liegen, stärker gekrümmt sind als die Korrekturkrümmungen, die auf den Wendepunkten der umlaufenden Wellen liegen, so dass alle Punkte jeder geschlossenen umlaufenden Wellenlinie (21, 22, 23, 24, 25), die sich gemäß der Umfangsrichtung (D_{C}) erstreckt, denselben Bogenabstand von der Verbindung (j) zwischen der ersten Drapierfläche (100) und der zweiten Drapierfläche (200) haben, wobei dieser Bogenabstand zu der zweiten Drapierfläche gehört.

8. Form nach Anspruch 7, umfassend mehrere trennbare Teile, die so abgegrenzt sind, dass ein Entformen nach dem Drapieren ermöglicht wird.

## Claims

1. A method for determining a geometry of a lay-up mould for producing a blank of a component (4) made of composite material, comprising a body (1) of revolution with axis A directed in an axial direction (D_{A}), said body (1) extending around the axial direction (D_{A}) in a circumferential direction (D_{C}), and at least one flange (2) extending from one end of the body (1) in a direction of extension (D_{E}), the method comprising:
- determining a first surface (100) of revolution of axis A directed in the axial direction (D_{A}) having the shape of the body (1) to be produced, said first surface (100) extending around the axial direction (D_{A}) in the circumferential direction (D_{C}),
- determining a second surface (200) situated in the prolongation of the first surface (100) in a prolongation direction (D_{P}), the angle formed between the axial direction (D_{A}) and the prolongation direction (D_{P}) being greater than the angle formed between the axial direction (D_{A}) and the direction of extension (D_{E}), the second surface (200) having closed curves (21, 22, 23, 24, 25) of undulation in the circumferential direction (D_{C}) continuing successively in the prolongation direction (D_{P}), each closed curve (21, 22, 23, 24, 25) of circumferential undulation corresponding to a circle belonging to the flange (2) to be produced, the curvilinear length of said closed curve (21, 22, 23, 24, 25) corresponding to the value of the perimeter (l₁, l₂, l₃, l₄, l₅) of said circle,
the method being **characterised in that** the second surface (200) also has corrective curvatures (32, 33) in the prolongation direction (D_{P}), such that all the points of each closed curve (21, 22, 23, 24, 25) of circumferential undulation are at a same curvilinear distance from the junction (j) between the first surface (100) and the second surface (200), said curvilinear distance belonging to the second surface (200) and having a value corresponding to the curvilinear distance (e₁, e₁+e₂, e₁+e₂+e₃, e₁+e₂+e₃+e₄, eₜₒₜₐₗ) between the circle belonging to the flange (2) to be produced corresponding to said closed curve (21, 22, 23, 24, 25), and the junction between the flange (2) and the body (1) to be produced.

2. The determination method according to claim 1, wherein the points of inflection of each closed curve (21, 22, 23, 24, 25) of circumferential undulation are on a same circle.

3. The determination method according to claim 1 or 2, wherein the minima of each closed curve (21, 22, 23, 24, 25) of circumferential undulation are on a same circle, the radius of which is greater than or equal to the radius of the circle (20) producing the junction (j) between the first surface (100) and the second surface (200).

4. The determination method according to any one of claims 1 to 3, wherein the corrective curvatures (33) situated on the maxima of the circumferential undulations are more curved than the corrective curvatures (32) situated on the points of inflection of the circumferential undulations.

5. The determination method according to any one of claims 1 to 4, wherein the flange (2) to be produced comprises a fillet at its junction with the body (1) to be produced.

6. A method for manufacturing a composite material component (4) comprising a body (1) of revolution with axis A directed in an axial direction (D_{A}), said body (1) extending around the axial direction (D_{A}) in a circumferential direction (D_{C}), and at least one flange (2) extending from one end of the body (1) in a direction of extension (D_{E}), the method comprising:
- producing a lay-up mould comprising a first lay-up surface and a second lay-up surface, the first lay-up surface and the second lay-up surface respectively corresponding to at least one portion of the first surface (100) and of the second surface (200) determined according to the method for determining a lay-up mould geometry according to any one of claims 1 to 5,
- forming a fibrous blank of the component (4) to be obtained by depositing a plurality of fibrous layers on the lay-up mould comprising the first lay-up surface and the second lay-up surface, the depositing being performed by automated fibre placement,
- shaping a portion (2c) of the fibrous blank formed on the second lay-up surface in the direction of extension (D_{E}), so as to obtain a fibrous preform having the shape of the body (1) and of the flange (2) to be produced, and
- densification of the preform by a matrix in such a way as to obtain the composite material component (4).

7. A mould for the lay-up of fibrous structures comprising a first lay-up surface (100) and a second lay-up surface (200) extending in the prolongation of the first lay-up surface in a prolongation direction (D_{P}), the first lay-up surface being a surface of revolution of axis A directed in an axial direction (D_{A}), said first lay-up surface extending around the axial direction (D_{A}) in a circumferential direction (D_{C}), the mould being such that the second lay-up surface (200) has undulations in the circumferential direction (D_{C}) and corrective curvatures (32, 33) in the prolongation direction (D_{P}), the corrective curvatures (32, 33) situated on the maxima of the circumferential undulations being more curved than the corrective curvatures situated on the points of inflection of the circumferential undulations, such that all the points of each closed curve (21, 22, 23, 24, 25) of circumferential undulation extending in the circumferential direction (D_{C}) are at a same curvilinear distance from the junction (j) between the first lay-up surface (100) and the second lay-up surface (200), said curvilinear distance belonging to the second lay-up surface.

8. The mould according to claim 7, comprising a plurality of separable parts delimited so as to allow demoulding after the lay-up.
